# EUROPEAN PATENT APPLICATION

(11) **EP 4 528 499 A1**
(43) Date of publication of application: **26.03.2025**
(21) Application number: 23910200.7
(22) Date of filing: 15.12.2023
(51) Int. Cl.: G06F 9/451, G06F 3/0486

(54) **SPECIAL EFFECT DISPLAY METHOD AND APPARATUS, ELECTRONIC DEVICE, AND STORAGE MEDIUM**

(30) Priority: 29.12.2022 CN 202211715606
(71) Applicant: Beijing Zitiao Network Technology Co., Ltd., Beijing 100190 (CN)
(72) Inventor: HUANG, Weifeng, Beijing 100028 (CN); YIN, Xunpeng, Beijing 100028 (CN); LIU, Gao, Beijing 100028 (CN); WEI, Yantong, Beijing 100028 (CN); WANG, Ziyue, Beijing 100028 (CN); QIN, Yuwen, Beijing 100028 (CN); YE, Zhanhong, Beijing 100028 (CN); WU, Yueqian, Beijing 100028 (CN)
(74) Representative: Williams, Michael David
(86) International application number: PCT/CN2023/138974
(87) International publication number: WO 2024/140270

(57) **Abstract**

Embodiments of the present disclosure provide a special effect display method and apparatus, an electronic device, and a storage medium. The method comprises: receiving a first trigger operation, and displaying an effect editing interface, wherein the effect editing interface displays effect editing items corresponding to special effect elements which have been added into a special effect object; receiving a second trigger operation for the effect editing items corresponding to the special effect elements, and displaying effect editing parameters corresponding to the special effect elements; and receiving a parameter setting operation for the effect editing parameters, and determining the display effect of the special effect elements on the basis of parameter values of set effect editing parameters. In this way, the personalized adjustment of the special effect display effect can be realized, thereby improving the richness and interestingness of the special effect display effect.

## Description

This application claims priority to Chinese Patent Application No. 202211715606.4, filed on December 29, 2022, the content of which is hereby incorporated by reference in its entirety as part of this application.

### TECHNICAL FIELD

Embodiments of the present disclosure relate to a special effect display method and apparatus, an electronic device, and a storage medium.

### BACKGROUND

With the development of information technology, a special effect display may make images or videos more interesting, and the richness effect of the display of special effect is often related to display modes of respective special effect elements in the special effects.

In some cases, display modes of special effect elements of a mobile terminal are mostly fixed display special effects, with single display effect. It is necessary to modify code again when the display effect of special effects needs to be adjusted, which is complex in operation and makes it impossible for users to personalize the display effect of special effects.

### SUMMARY

The present disclosure provides a special effect display method and apparatus, an electronic device, and a storage medium so as to realize special effect adjustment personalization and further improves the special effect display effect.

Embodiments of the disclosure provides a special effect display method. The method comprises:
receiving a first triggering operation and displaying an effect editing interface, wherein the effect editing interface displays effect editing items corresponding to special effect elements that have been added into a special effect action object;
receiving a second triggering operation for the effect editing items corresponding to the special effect elements and displaying effect editing parameters corresponding to the special effect elements;
receiving a parameter setting operation for the effect editing parameters, and determining, based on parameter values of the set effect editing parameters, a display effect of the special effect elements.

Embodiments of the disclosure also provides a special effect display apparatus. The apparatus comprises:
an editing interface display module, for receiving a first triggering operation and displaying an effect editing interface, wherein the effect editing interface displays effect editing items corresponding to special effect elements that have been added to a special effect action object;
an editing parameter display module, for receiving a second triggering operation for the effect editing items corresponding to the special effect elements and displaying effect editing parameters corresponding to the special effect elements;
a display effect determination module, for receiving a parameter setting operation for the effect editing parameters, and determining, based on parameter values of the set effect editing parameters, a display effect of the special effect elements.

Embodiments of the disclosure also provides an electronic device. The electronic device comprises:
one or more processors; and
a storage apparatus, for storing one or more programs;
when the one or more programs are executed by the one or more processors, the one or more processors can implement the special effect display method according to any one of embodiments of the disclosure.

Embodiments of the disclosure also provides a storage medium comprising computer-executable instructions, wherein the computer-executable instructions, when executed by a computer processor, are used for executing the special effect display method according to any one of embodiments of the disclosure.

### BRIEF DESCRIPTION OF DRAWINGS

The above and other features, advantages, and aspects of each embodiment of the present disclosure may become more apparent by combining drawings and referring to the following specific implementation modes. In the drawings throughout, same or similar drawing reference signs represent same or similar elements. It should be understood that the drawings are schematic, and originals and elements may not necessarily be drawn to scale.
Fig. 1 is a schematic flowchart of a special effect display method according to an embodiment of the present disclosure;
Fig. 2 is a schematic diagram of an effect editing parameter interface, for a special effect display method of the embodiment of the present disclosure, according to an embodiment of the present disclosure;
Fig. 3 is a schematic diagram of an animation option display interface, for a special effect display method of the embodiment of the present disclosure, according to an embodiment of the present disclosure;
Fig. 4 is a schematic diagram of converting parameter values into a node relationship graph, for a special effect display method of the embodiment of the present disclosure, according to an embodiment of the present disclosure;
Fig. 5 is a schematic flowchart of another special effect display method according to an embodiment of the present disclosure;
Fig. 6 is a schematic diagram of a switch setting operation interface of special effect elements, for a special effect display method of the embodiment of the present disclosure, according to an embodiment of the present disclosure;
Fig. 7 is a schematic diagram of a trigger event setting operation interface, for a special effect display method of the embodiment of the present disclosure, according to an embodiment of the present disclosure;
Fig. 8 is a schematic structural diagram of a special effect display apparatus according to an embodiment of the present disclosure; and
Fig. 9 is a schematic structural diagram of an electronic device according to an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method embodiments of the present disclosure may be performed in different orders, and/or performed in parallel. Furthermore, additional steps may be included and/or the execution of the illustrated steps may be omitted in the method embodiments. The scope of the present disclosure is not limited in this respect.

The term "include/comprise" used herein and the variations thereof are an open-ended inclusion, namely, "include/comprise but not limited to". The term "based on" means "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first," "second," etc. mentioned in the present disclosure are only used to distinguish different apparatuses, modules, or units, and are not intended to limit orders or interdependence relationships of functions performed by these apparatuses, modules, or units.

It should be noted that modifications of "one" and "more" mentioned in the present disclosure are schematic rather than restrictive, and those skilled in the art should understand that otherwise explicitly stated in the context, it should be understood as "one or more".

The names of messages or information exchanged between a plurality of apparatuses in the embodiments of the present disclosure are used for illustrative purposes only, and are not indicated to limit the scope of these messages or information.

It may be understood that before using the technical solutions disclosed in the embodiments of the present disclosure, the types, scope of use, and usage scenarios of personal information involved in the present disclosure and the like shall be informed to the user and the user's authorization shall be obtained in an appropriate manner in accordance with relevant laws and regulations.

For example, when receiving an active request from a user, a prompt message is sent to the user to explicitly prompt the user that an operation requested by the user will need to obtain and use the user's personal information. In this way, the user can choose whether to provide personal information to a software or hardware such as an electronic device, an application, a server, or a storage medium that performs the operation of the technical solution of the present disclosure according to the prompt message.

As an optional but non-limiting implementation, in response to receiving an active request from a user, the prompt message may be sent to the user in the form of a pop-up window, and the prompt message may be presented in the pop-up window in the form of text. In addition, the pop-up window may also carry a selection control for the user to select "agree" or "disagree" to provide personal information to the electronic device.

It may be understood that the above process of notifying and obtaining user authorization is only schematic, and does not limit the implementation of the present disclosure. Other manners that meet relevant laws and regulations may also be applied to the implementation of the present disclosure.

It may be understood that the data (including but not limited to the data itself, data acquisition, or use) involved in the technical solutions of the present disclosure shall comply with the requirements of the corresponding laws, regulations, and related provisions.

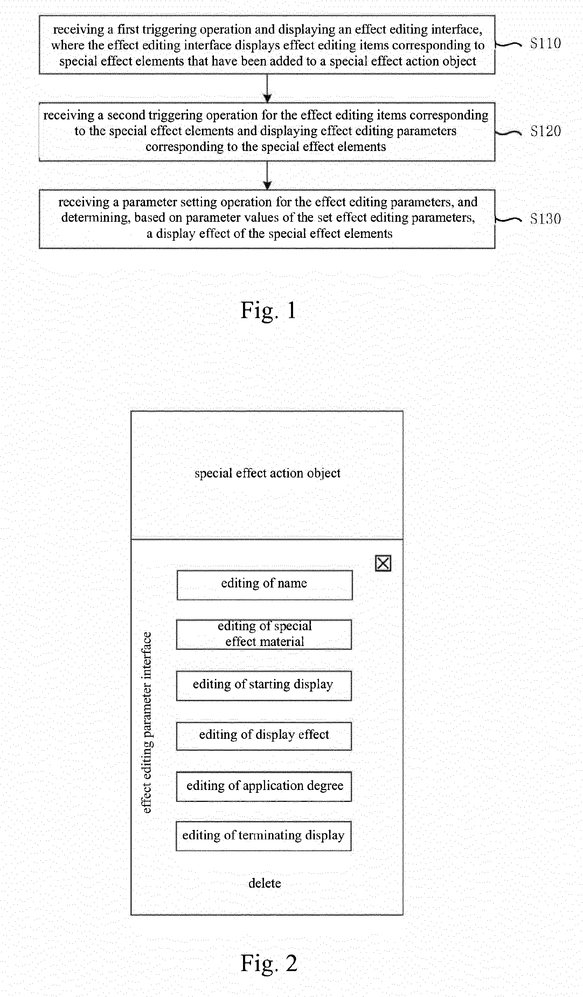

Fig. 1 is a schematic flowchart of a special effect display method according to an embodiment of the present disclosure, which is applicable to the case of adding special effects to personalize images and videos, and this method may be performed by a special effect display apparatus, which may be implemented in the form of software and/or hardware, and optionally, by an electronic device, which may be a mobile terminal, a PC terminal, a server, or the like.

As shown in Fig. 1, the method of this embodiment may specifically include the following steps.

S110: receiving a first triggering operation and displaying an effect editing interface, where the effect editing interface displays effect editing items corresponding to special effect elements that have been added to a special effect action object.

Herein, the first triggering operation may be an operation of triggering for displaying the effect editing interface. The first triggering operation may be an operation of triggering a preset display control for accessing the effect editing interface when a user wants to display the effect editing interface; alternatively, it may be a triggering operation based on a preset sound information and/or a preset gesture input, etc.. The special effect action object may refer to a preset sample image or sample video, etc., that may be used for displaying a display effect of the special effects. The special effect elements may refer to special effect materials selectable by the user. For example, the special effect elements may include at least one of elements such as a special effect hat, a special effect glasses, a special effect beauty and a special effect makeup and so on. The effect editing item may refer to an item that may be triggered for editing the display effect of the special effect elements. For example, the effect editing item may include at least one of editing items such as special effect naming, material editing, special effect replacement, special effect hiding, special effect locking, and special effect deletion and so on.

Specifically, after the selected special effect element is added to an image or video, the first triggering operation inputted for the special effect action object may be received, and then, in response to the first triggering operation, the effect editing interface corresponding to the special effect action object is displayed. Specifically, after the first triggering operation is received, the effect editing items corresponding to the added special effect element in the special effect action object may be displayed to enable the user to perform effect editing for the added special effect element.

It can be understood that the added special effect element in the special effect action object may be one or more. The type of the added special effect element in the special effect action object may be one or more. The effect editing items corresponding to different special effect elements may be the same or different.

In an embodiment of the present disclosure, the effect editing interface may separately display the effect editing items corresponding to each added special effect element in the special effect action object, and provide an effect editing function for each special effect element, thus bringing convenience for the user to set personalized display effect.

S120: receiving a second triggering operation for the effect editing items corresponding to the special effect elements and displaying effect editing parameters corresponding to the special effect elements.

Herein, the second triggering operation may refer to a triggering operation for the effect editing items corresponding to the special effect element. Exemplarily, it may be a click operation, a slide operation, a selection operation, or a press operation and so on that acts on the special effect editing items. The effect editing parameters may be parameters that may be set by the user and may be used for indicating parameters of different display effects of the special effect element. Exemplarily, the effect editing parameters may include at least one of parameters such as a special effect element start time, a special effect element termination time, a special effect element duration, a special effect element start event, a special effect element termination event, a special effect element display position, a special effect element display size, a special effect element display mode, and so on.

Specifically, the second triggering operation for the effect editing items corresponding to the added special effect elements is received, the special effect element corresponding to the second triggering operation is determined, and the effect editing parameters corresponding to the special effect element are displayed for the user to edit the parameters, so as to determine a display solution for the special effect element. It is to be noted that, in the case that the second triggering operation refers to a special effect deletion, the special effect element is deleted from the special effect acting object displayed in the effect editing interface, and the display of the special effect element in the special effect action object is canceled.

It should be noted that based on the second triggering operation, the effect editing interface may be switched to the effect editing parameter interface, i.e., an interface of details for editing a specific display effect of the special effect element. One or more effect editing parameters corresponding to the special effect element may be displayed in the effect editing parameter interface. Fig. 2 is a schematic diagram of an effect editing parameter interface, for the special effect display method of the embodiment of the present disclosure, according to an embodiment of the present disclosure. As shown in Fig. 2, the effect editing parameter interface may include, but is not limited to, at least one of an edit box for name of a special effect element, an edit box for special effect material used for the special effect element, an edit box for starting display of the special effect element, an edit box for the display effect of special effects (e.g., style, and filter), an edit box for the degree of special effect application (e.g., the degree to which the beauty special effects are applied to the special effect action object may be set to a preset proportion), an edit box for display termination of the special effect element, and special effect element deletion control. The user may perform editing operations on the respective effect editing parameters to realize the effect editing of the special effect element.

S130: receiving a parameter setting operation for the effect editing parameters, and determining, based on parameter values of the set effect editing parameters, a display effect of the special effect elements.

Herein, the parameter setting operation may refer to an operation of setting specific parameter values against the effect editing parameters for determining a specific display solution for the special effect elements. The parameter value may refer to a specific presentation value set for the effect editing parameter. Exemplarily, the effect editing parameters refer to an animation mode, and the parameter value of the effect editing parameter, i.e., the parameter value of the animation mode, may refer to a heartbeat mode, a vibration mode, a blinking mode, or the like.

Specifically, the parameter setting operation for the effect editing parameters is received, the parameter values for the effect editing parameters in the parameter setting operation are determined, and the display effect of the special effect elements is determined based on the parameter value. After the display effect of all the added special effect elements is determined, a special effect work may be previewed and displayed based on a preview operation triggered by the user, and the special effect work may be published based on a publish operation triggered by the user.

Exemplarily, in the absence of setting the effect editing parameters corresponding to the special effect elements, the continuous display of the special effect elements is taken as the display effect of the special effect elements.

Specifically, in response to that the user has not set the effect editing parameters corresponding to the special effect elements, the parameter values of the effect editing parameters corresponding to the special effect elements are default values, and the special effect elements will be displayed with the display effect of continuous display, i.e., the special effect elements start to be displayed at the beginning of the special effect play and stops to be displayed until the end of the special effect play.

Exemplarily, the effect editing parameters include an animation setting parameter; the receiving the parameter setting operation for the effect editing parameter includes: receiving a parameter setting operation for the animation setting parameter and displaying multiple animation options; and receiving a selection operation for the animation options, and using the selected animation option as a parameter value of the animation setting parameter.

Herein, the animation setting parameter may be understood as a parameter for setting the form of animation in which the special effect element is to be displayed. The animation option may be a preset control that is selectable by the user and is used for indicating a certain form of animation.

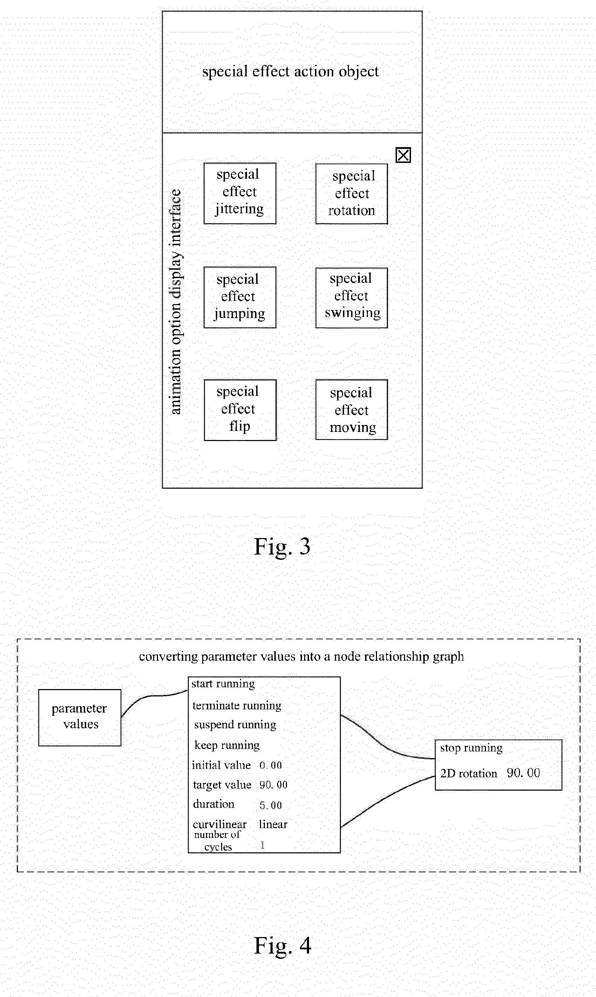

Specifically, the effect editing parameters may include an animation setting parameter. In response to that the user edits and set the effect editing parameters as the animation setting parameter, a parameter setting operation by the user for the animation setting parameter is received and an animation option display interface is displayed, where the animation option display interface displays multiple animation options. Fig. 3 is a schematic diagram of an animation option display interface, for the special effect display method of the embodiment of the present disclosure, according to an embodiment of the present disclosure. As shown in Fig. 3, the animation options may include special effect of jittering, rotation, jumping, swinging and moving.

Specifically, by receiving the user's selection operation, determining the animation option corresponding to the selection operation, and taking the selected animation option as the parameter value of the animation setting parameter, the cost and complexity of setting the special effect element to be displayed in animation in the mobile terminal is reduced, the computing power configuration of the mobile terminal is well adapted, the display effect of the special effect element may be improved, and thus the user experience is improved.

In the technical solution of the embodiment of the present disclosure, by receiving a first triggering operation, the effect editing interface is displayed, where the effect editing interface displays effect editing items corresponding to special effect elements that have been added into a special effect action object, which may provide the user with a personalized editing operation for special effects. By receiving a second triggering operation for the effect editing items corresponding to the special effect elements and displaying effect editing parameters corresponding to the special effect elements, a specific effect editing parameters corresponding to the special effect elements can be provided. By receiving a parameter setting operation for the effect editing parameters, and determining, based on parameter values of set effect editing parameters, a display effect of the special effect elements, the personalized adjustment of special effects may be realized and the richness and interest of the display effect of special effects may be improved. Moreover, through an interactive operation, the switching of display content of the interface is controlled, enabling the interface to be adapted to the limited display region size of the mobile terminal; and by the way of displaying an interactive interface after encapsulating a special effect production module, the computing power requirement for the terminal can be reduced, thereby supporting the operation of the special effect processing on the mobile terminal.

Based on the above embodiments, determining, based on the effect editing parameters set by the parameter setting operation, a display effect of the special effect elements, includes:
converting the parameter values of the effect editing parameters into a node relationship graph based on a visualization node tool, generating an effect control script based on the node relationship graph, and executing the effect control script to cause the special effect elements to present a display effect corresponding to the effect editing parameters.

For example, the visualization node tool may be Graph.

In an embodiment of the present disclosure, for the effect control script corresponding to the special effect elements, there is no need for the user or developer to perform script editing. The effect control script may be automatically generated based on the node relationship graph. Fig. 4 is a schematic diagram of converting parameter values into a node relationship graph according to an embodiment of the present disclosure. As shown in Fig. 4, by means of the visualization node tool, the parameter values set by the user for editing may be transformed into the node relationship graph, the effect control script may be automatically generated based on the relationship node graph, and the automatic generation of the effect control script by the visualization node tool may reduce the memory consumption of the mobile terminal and improve the display performance of the mobile terminal. Further, the execution of the automatically generated effect control script may achieve that the special effect elements presents a display effect corresponding to the effect editing parameters, reduce the display cost of the special effect elements and improve the user experience.

Based on the respective optional technical solutions in the embodiments of the present disclosure, the special effect display method may further include: when the effect editing interface is in a display state, in response to a selection operation acting on special effect elements in a template image, highlighting effect editing items corresponding to the selected special effect element in the effect editing interface. Herein, the highlighting manner may be in the form of marking with a preset identifier, highlighting, or adjusting display information of the effect editing items. Exemplarily, adjusting display information of the effect editing items may include, but is not limited to, at least one of information adjustment modes such as transforming the display content, transforming the display form, transforming the display size, and transforming the display color and so on. The advantage of such setting is that the selection operation for the special effect elements in the template image and the effect editing items corresponding to the selected special effect element in the effect editing interface may be displayed in linkage.

Optionally, the special effect display method may further include: when the effect editing interface is in a display state, in response to a selection operation acting on special effect elements in a template image, displaying effect editing parameters corresponding to the special effect elements. By selecting a special effect element in the template image and quickly displaying the specific effect editing parameters corresponding to the special effect element, the quick editing of the display effect of the special effect element is realized.

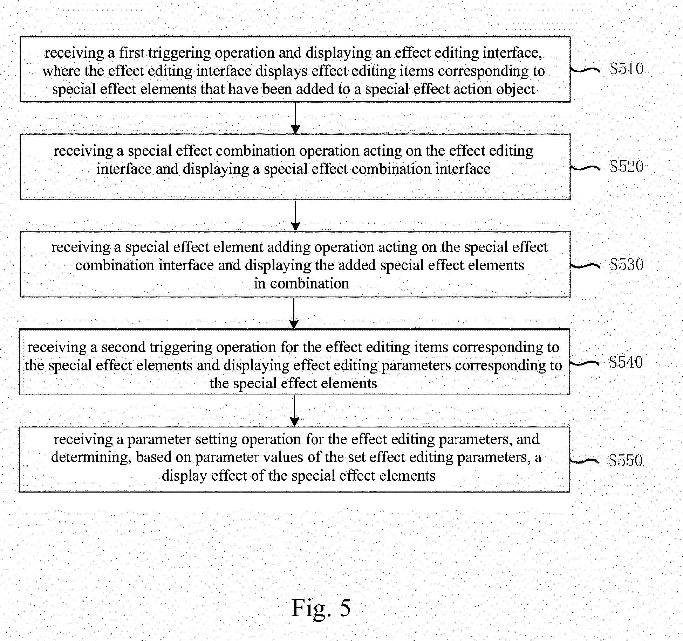

Fig. 5 is a schematic flowchart of another special effect display method according to an embodiment of the present disclosure. Based on the above embodiments, the technical solution of this embodiment further details how to perform the special effect combination display. The specific implementation may refer to the description of this embodiment. Technical features that are the same or similar to the foregoing embodiments will not be repeated herein.

S510: receiving a first triggering operation and displaying an effect editing interface.

S520: receiving a special effect combination operation acting on the effect editing interface and displaying a special effect combination interface.

Herein, the special effect combination operation may be a control trigger operation that triggers an effects combination trigger control preset in the effect editing interface.

In an embodiment of the present disclosure, the display effect of a single special effect element may be edited, or the display of multiple special effect elements may be associated. The special effect combination interface may be used for displaying the multiple special effect elements in combination. Specifically, the special effect combination operation triggered by the user is received in the effect editing interface, and the special effect combination interface is further displayed on the basis of displaying the effect editing interface.

S530: receiving a special effect element adding operation acting on the special effect combination interface and displaying the added special effect elements in combination.

Herein, the special effect element adding operation may be an operation of selecting the special effect elements or an operation of dragging the special effect elements to the special effect combination interface.

Specifically, the special effect element adding operation acting on the special effect combination interface is received, multiple special effect elements to be combined are added to the special effect combination interface, and the multiple added special effect elements are displayed in combination. It should be noted that after the user triggers the adding operation, the special effect elements may be arranged and displayed in the special effect combination interface from bottom to top or from left to right according to the order of adding the special effect elements. Further, based on the sequence of adding the special effect elements, the special effect display effect corresponding to the combination of the added special effect elements may be displayed superimposed in accordance with the canvas hierarchy of each special effect element. Exemplarily, in response to a dragging operation for the added special effect elements displayed in the special effect combination interface, the canvas hierarchies of the special effect elements may be changed to enhance the superimposed display effect of the special effect combination.

Exemplarily, displaying the added special effect elements in combination includes: receiving a switch setting operation for multiple added special effect elements, and determining, based on the switch setting operation, a switch manner among the multiple special effect elements; and switching the displaying of the multiple special effect elements in the switch manner in response to a preview triggering operation.

Herein, the switch setting operation may be understood as an operation for setting a switch manner among the multiple special effect elements. It should be noted that the switch manner between every two of the multiple special effect elements may be set to the same or different switch manner. For example, the special effect elements to be combined include a special effect element A, a special effect element B, and a special effect element C; and the switching order of the special effect elements is from the special effect element A to the special effect element B to the special effect element C; and the switch manner between the special effect element A and the special effect element B may be the same as or different from that between the special effect element B and the special effect element C.

In the technical solution of the embodiment of the present disclosure, the user may set multiple special effect elements to be switched and displayed. Specifically, in response to receiving the switch setting operation by the user for the multiple added special effect elements, the special effect element switch manner among the multiple special effect elements is determined according to the switch setting operation triggered by the user. In response to receiving the preview triggering operation triggered by the user, the multiple special effect elements are switched and displayed in the switch manner corresponding to the switch setting operation, which can improve the display effect of the special effect elements in the mobile terminal. Moreover, the switch manner is determined based on the operation triggered by the user, which can simplify the process of determining the switch manner of the special effect elements, and improve the user experience.

Exemplarily, receiving a switch setting operation for multiple added special effect elements, and determining, based on the switch setting operation, a switch manner among the multiple special effect elements includes: receiving a selection operation for a switch mode of the multiple added special effect elements, and using the selected switch mode as the switch mode among the multiple special effect elements.

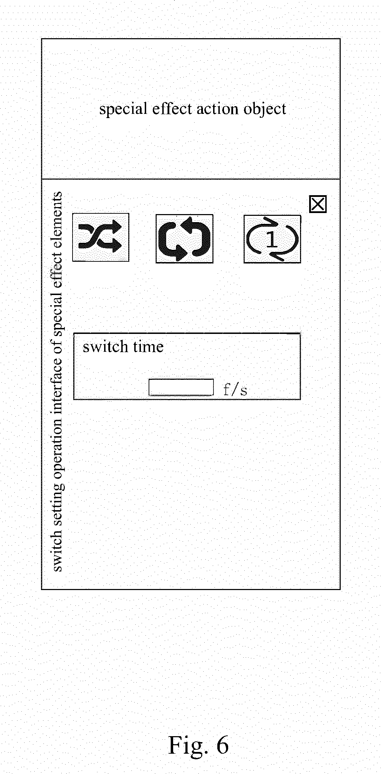

Fig. 6 is a schematic diagram of a switch setting operation interface of special effect elements, for the special effect display method of the embodiment of the present disclosure, according to an embodiment of the present disclosure. As shown in Fig. 6, the switch mode may include at least one of modes such as a random switch mode, a sequential switch mode, and a single loop mode and so on. Specifically, the switch mode selected for the multiple special effect elements is received, and the switch mode selected by the user is used as the switch mode among the multiple special effect elements. Exemplarily, in response to that the switch mode is not selected for the multiple special effect elements, the random switch mode may be used as the switch mode among the multiple special effect elements, and the sequential switch mode may also be used as the switch mode among the multiple special effect elements.

S540: receiving a second triggering operation for the effect editing item corresponding to the special effect elements and displaying effect editing parameters corresponding to the special effect elements.

S550: receiving a parameter setting operation for the effect editing parameters, and determining, based on parameter values of set effect editing parameters, a display effect of the special effect elements.

In the technical solution of the embodiment of the present disclosure, the special effect combination interface is displayed by receiving a special effect combination operation acting on the effect editing interface. By receiving a special effect element adding operation acting on the special effect combination interface and displaying the added special effect elements in combination, the multiple special effect elements may be displayed in linkage, which further improves the richness of the display of the special effect.

Based on the above embodiments, receiving a switch setting operation for multiple added special effect elements, and determining, based on the switch setting operation, a switch manner among the multiple special effect elements includes: receiving a switch time setting operation for the multiple added special effect elements, and using the set switch time as a continuous display time of every two of the special effect elements.

As shown in Fig. 6, the user may set switch time for the switching among the multiple special effect elements, which specifically includes: in response to receiving a switch time setting operation for the multiple added special effect elements by the user, determining the switch time corresponding to the setting operation, and using the switch time as a continuous display time of every two of the special effect elements. Optionally, the switch time may also be determined by the number of switched frames of the multiple special effect elements per unit time, or the continuous display time of a single special effect element, or the number of image frames in the continuous display of the single special effect element, and so on. It can be understood that the switch time in the embodiment of the present disclosure may be set according to actual demand, and its specific value is not limited herein. Through the setting of the switch time, the switching frequency among the multiple special effect elements is adjustable, which enables a better matching between the multiple special effect elements and the special effect application objects and supports different display effects.

Based on the above embodiments, receiving a switch setting operation for multiple added special effect elements, and determining, based on the switch setting operation, a switch manner among the multiple special effect elements includes: receiving a switch start setting operation for the multiple added special effect elements, and determining a trigger event for starting the switching and displaying among the multiple special effect elements; and/or, receiving a switch end setting operation for the multiple added special effect elements, and determining a trigger event for ending the switching and displaying among the multiple special effect elements.

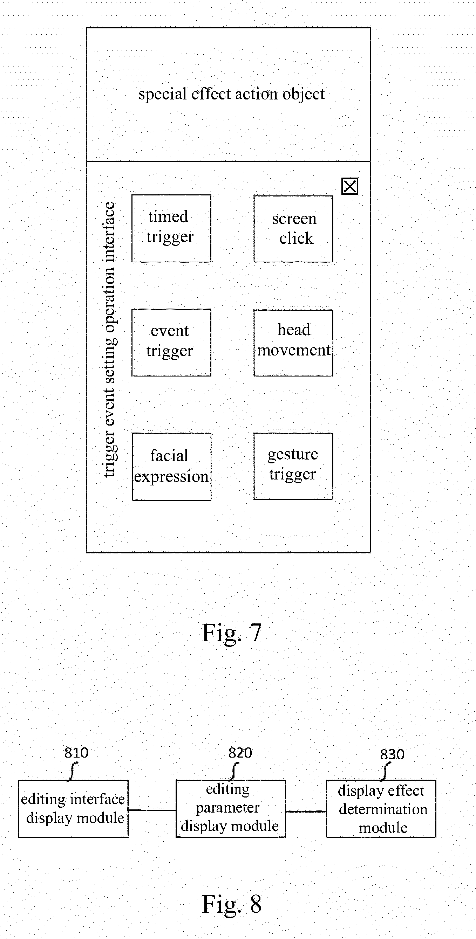

Herein, the switch start setting operation may refer to a setting operation that triggers the switch start among the multiple special effect elements. The switch end setting operation may refer to a setting operation that triggers the switch end among the multiple special effect elements. Fig. 7 shows a trigger event setting operation interface, for the special effect display method of the embodiment of the present disclosure, according to an embodiment of the present disclosure. As shown in Fig. 7, the trigger event for starting or ending the switching and displaying among the multiple special effect elements may include at least one of timed trigger, screen click, event trigger, head movement, facial expression, and gesture trigger, and the like.

Specifically, a switch start setting operation by the user for the multiple added special effect elements is received, a trigger event of the switching and displaying corresponding to the switch start setting operation is determined; and/or, a switch end setting operation by the user for the multiple added special effect elements is received, and the trigger event of the switching and displaying corresponding to the switch end setting operation is determined. In response to detect the trigger event corresponding to the switch start setting operation, an operation of starting the switching and displaying among the multiple special effect elements is performed, and/or in response to detect the trigger event corresponding to the switch end setting operation, an operation of stopping the switching and displaying among the multiple special effect elements is performed, i.e., the triggering mode of starting the display of the special effect elements as well as the triggering mode of ending the display may be set, so as to increase the diversity of the display of the special effect display effect. Moreover, the start and end of the switching and displaying among the special effect elements is realized through the trigger events, and the interactive interaction between the mobile terminal and the user can be realized, thus enhancing the interest of display of the special effect display effect, and improving the user experience in using the special effects.

Fig. 8 is a schematic structural diagram of a special effect display apparatus according to an embodiment of the present disclosure. As shown in Fig. 8, the apparatus includes: an editing interface display module 810, an editing parameter display module 820, and a display effect determination module 830.

The editing interface display module 810 is configured to receive a first triggering operation and display an effect editing interface, where the effect editing interface displays effect editing items corresponding to special effect elements that have been added to a special effect action object.

The editing parameter display module 820 is configured to receive a second triggering operation for the effect editing items corresponding to the special effect elements and display effect editing parameters corresponding to the special effect elements.

The display effect determination module 830 is configured to receive a parameter setting operation for the effect editing parameters, and determine, based on parameter values of the set effect editing parameters, a display effect of the special effect element.

Optionally, the display effect determination module 830 includes an effect control script generation unit.

The effect control script generation unit is configured to convert the parameter values of the effect editing parameters into a node relationship graph based on a node visualization tool, generate an effect control script based on the node relationship graph, and execute the effect control script to cause the special effect elements to present a display effect corresponding to the effect editing parameters.

Optionally, the effect editing parameters include an animation setting parameter. Correspondingly, the display effect determination module 830 may be further configured to receive a parameter setting operation for the animation setting parameter and display multiple animation options; receive a selection operation for the animation options, and use the selected animation option as a parameter value of the animation setting parameter.

Optionally, the special effect display apparatus further includes a special effect combination display module.

The special effect combination display module is configured to receive a special effect combination operation acting on the effect editing interface and display a special effect combination interface; and receive a special effect element adding operation acting on the special effect combination interface, and display the added special effect elements in combination.

Optionally, the special effect combination display module includes a special effect switch setting unit.

The special effect switch setting unit is configured to receive a switch setting operation for multiple added special effect elements, and determine, based on the switch setting operation, a switch manner among the multiple special effect elements; and switch and display the multiple special effect elements in the switch manner in response to a preview triggering operation.

Optionally, the special effect switch setting unit includes a switch mode determination subunit.

The switch mode determination subunit is configured to receive a selection operation of a switch mode for the multiple added special effect elements, and use the selected switch mode as the switch mode among the multiple special effect elements.

Optionally, the special effect switch setting unit includes a switch time determination subunit.

The switch time determination unit is configured to receive a switch time setting operation for the multiple added special effect elements, and use the set switch time as a continuous display time of every two of the special effect elements.

Optionally, the special effect switch setting unit includes a trigger event determination subunit.

The trigger event determination subunit is configured to receive a switch start setting operation for the multiple added special effect elements, and determine a trigger event for starting the switching and displaying of the multiple special effect elements; and/or, receive a switch end setting operation for the multiple added special effect elements, and determine a trigger event for ending the switching and displaying of the multiple special effect elements.

Optionally, the display effect determination module 830 may be further configured to, in the absence of setting the effect editing parameters corresponding to the special effect elements, take the continuous display of the special effect elements as the display effect of the special effect elements.

Optionally, the special effect display apparatus further includes:
a linkage selection module configured to, when the effect editing interface is in a display state, in response to a selection operation acting on the special effect elements in a template image, highlight the effect editing items corresponding to the selected special effect element in the effect editing interface, or display effect editing parameters corresponding to the special effect elements.

In the technical solution of the embodiment of the present disclosure, by receiving a first triggering operation triggered by the user, an effect editing interface is displayed, where the effect editing interface displays effect editing items corresponding to special effect elements that have been added to a special effect action object, which may provide the user with a special effect personalized editing operation. By receiving a second triggering operation for the effect editing items corresponding to the special effect elements and displaying effect editing parameters corresponding to the special effect elements, the display effect of the special effect elements can be enhanced. By receiving a parameter setting operation for the effect editing parameters, and determining, based on parameter values of the set effect editing parameters, a display effect of the special effect elements, the personalized adjustment of the special effect may be realized and the richness and interestingness of the special effect display effect may be improved. Moreover, through an interactive operation, the switching of the display content of the interface is controlled, enabling the interface to be adapted to the limited display region size of the mobile terminal; and by the way of displaying an interactive interface after encapsulating a special effect production module, the computing power requirement for the terminal can be reduced, thereby supporting the operation of the special effect processing on the mobile terminal.

The special effect display apparatus provided in the embodiment of the present disclosure may execute the special effect display method provided in any embodiment of the present disclosure, and has the corresponding functional modules for executing the method and beneficial effects.

It is worth noting that each unit and module included in the above device is only divided according to functional logic, but it is not limited to the above division, as long as the corresponding functions can be realized; in addition, the specific names of each functional unit are only for the convenience of distinguishing each other, and are not used to limit the protection scope of the embodiments of the present disclosure.

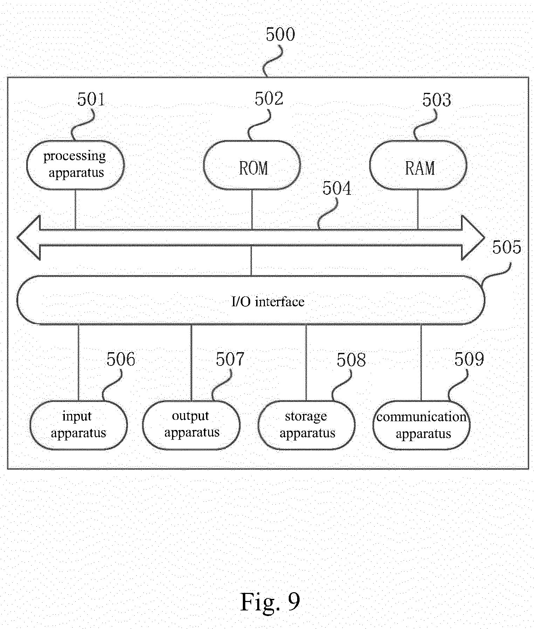

Fig. 9 is a schematic structural diagram of an electronic device according to an embodiment of the present disclosure. Referring to Fig. 5, Fig. 5 illustrates a schematic structural diagram of an electronic device 500 (for example, a terminal device or a server in Fig. 9) suitable for implementing some embodiments of the present disclosure. The terminal devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle terminal (e.g., a vehicle navigation terminal) or the like, and fixed terminals such as a digital TV, a desktop computer, or the like. The electronic device illustrated in Fig. 9 is merely an example, and should not pose any limitation to the functions and the range of use of the embodiments of the present disclosure.

As illustrated in Fig. 9, the electronic device 500 may include a processing apparatus (e.g., a central processing unit, a graphics processing unit, etc.) 501, which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An editing/output (I/O) interface 505 is also connected to the bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While Fig. 9 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of embodiments of the present disclosure are performed.

Names of messages or information exchanged among multiple devices in the embodiment of the present disclosure are only used for illustrative purposes, and are not used to limit the scope of these messages or information.

The electronic device according to the embodiments of this disclosure belongs to the same inventive concept as the special effect display method according to the above embodiments, and the technical details not described in detail in this embodiment can be found in the above embodiments, and this embodiment has the same beneficial effects as the above embodiments.

An embodiment of the present disclosure provides a computer storage medium, on which a computer program is stored, which, when executed by a processor, realizes the special effect display method according to the above embodiments.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program codes contained on the computer-readable medium may be transmitted by using any suitable medium, including but not limited to an electric wire, a fiber-optic cable, radio frequency (RF) and the like, or any appropriate combination thereof.

In some embodiments, the client and the server may communicate with any network protocol currently known or to be researched and developed in the future such as Hyper Text Transfer Protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to: receiving a first triggering operation and displaying an effect editing interface, wherein the effect editing interface displays effect editing items corresponding to special effect elements that have been added into a special effect action object; receiving a second triggering operation for the effect editing items corresponding to the special effect elements and displaying effect editing parameters corresponding to the special effect elements; and receiving a parameter setting operation for the effect editing parameters, and determining, based on parameter values of the set effect editing parameters, a display effect of the special effect elements.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or the like. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or may be connected to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the unit does not constitute a limitation of the unit itself under certain circumstances, for example, the first obtaining unit can also be described as "a unit that obtains at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semiconductor system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the disclosure, a first example provides a special effect display method, comprising:
receiving a first triggering operation and displaying an effect editing interface, wherein the effect editing interface displays effect editing items corresponding to special effect elements that have been added into a special effect action object;
receiving a second triggering operation for the effect editing items corresponding to the special effect elements and displaying effect editing parameters corresponding to the special effect elements;
receiving a parameter setting operation for the effect editing parameters, and determining, based on parameter values of the set effect editing parameters, a display effect of the special effect elements.

According to one or more embodiments of the disclosure, the second example provides a special effect display method, which comprises:
optionally, the determining, based on the effect editing parameters set by the parameter setting operation, the display effect of the special effect elements, comprising:
converting the parameter values of the effect editing parameters into a node relationship graph based on a node visualization tool, generating an effect control script based on the node relationship graph, and executing the effect control script to cause the special effect elements to present the display effect corresponding to the effect editing parameters.

According to one or more embodiments of the disclosure, the third example provides a special effect display method, which comprises:
optionally, the effect editing parameters comprises an animation setting parameter; the receiving the parameter setting operation for the effect editing parameters comprising:
receiving the parameter setting operation for the animation setting parameter and displaying multiple animation options;
receiving a selection operation for the animation options, and using the selected animation option as a parameter value of the animation setting parameter.

According to one or more embodiments of the disclosure, the fourth example provides a special effect display method, which comprises:
optionally, receiving a special effect combination operation acting on the effect editing interface and displaying a special effect combination interface;
receiving a special effect element adding operation acting on the special effect combination interface, and displaying the added special effect elements in combination.

According to one or more embodiments of the disclosure, the fifth example provides a special effect display method, which comprises:
optionally, the displaying the added special effect elements in combination comprising:
receiving a switch setting operation for multiple added special effect elements, and determining, based on the switch setting operation, a switch manner among the multiple special effect elements;
switching and displaying the multiple special effect elements in the switch manner in response to a preview triggering operation.

According to one or more embodiments of the disclosure, the sixth example provides a special effect display method, which comprises:
optionally, the receiving the switch setting operation for the multiple added special effect elements, and the determining, based on the switch setting operation, the switch manner among the multiple special effect elements, comprising:
receiving a selection operation of a switch mode for the multiple added special effect elements, and using the selected switch mode as the switch mode among the multiple special effect elements.

According to one or more embodiments of the disclosure, the seventh example provides a special effect display method, which comprises:
optionally, the receiving the switch setting operation for the multiple added special effect elements, and the determining, based on the switch setting operation, the switch manner among the multiple special effect elements, comprises:
receiving a switch time setting operation for the multiple added special effect elements, and using the set switch time as a continuous display time of every two of the special effect elements.

According to one or more embodiments of the disclosure, the eighth example provides a special effect display method, which comprises:
optionally, the receiving the switch setting operation for the multiple added special effect elements, and the determining, based on the switch setting operation, the switch manner among the multiple special effect elements, comprising:
receiving a switch start setting operation for the multiple added special effect elements, and determining a trigger event for starting the switching and displaying of the multiple special effect elements; and/or,
receiving a switch end setting operation for the multiple added special effect element, and determining a trigger event for ending the switching and displaying of the multiple special effect element.

According to one or more embodiments of the disclosure, the ninth example provides a special effect display method, which comprises:
optionally, in the absence of setting the effect editing parameters corresponding to the special effect elements, taking the continuous display of the special effect elements as the display effect of the special effect elements.

According to one or more embodiments of the disclosure, the tenth example provides a special effect display method, which comprises:
optionally, when the effect editing interface is in a display state, in response to a selection operation acting on special effect elements in a template image, highlighting the effect editing items corresponding to the selected special effect elements in the effect editing interface or displaying effect editing parameters corresponding to the special effect elements.

According to one or more embodiments of the disclosure, the eleventh example provides a special effect display apparatus, which comprises:
an editing interface display module, for receiving a first triggering operation and displaying an effect editing interface, wherein the effect editing interface displays effect editing items corresponding to special effect elements that have been added to a special effect action object;
an editing parameter display module, for receiving a second triggering operation for the effect editing items corresponding to the special effect elements and displaying effect editing parameters corresponding to the special effect elements;
a display effect determination module, for receiving a parameter setting operation for the effect editing parameters, and determine, based on parameter values of the set effect editing parameters, a display effect of the special effect elements.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the above disclosure concept. For example, the technical features described above may be mutually replaced with the technical features having similar functions disclosed herein (but not limited thereto) to form new technical solutions.

In addition, while operations have been described in a particular order, it shall not be understood as requiring that such operations are performed in the illustrated specific order or sequence. Under certain circumstances, multitasking and parallel processing may be advantageous. Similarly, while some specific implementation details are included in the above discussions, these shall not be construed as limitations to the scope of the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A special effect display method, comprising:
receiving a first triggering operation, and displaying an effect editing interface, wherein the effect editing interface displays effect editing items corresponding to special effect elements that have been added into a special effect action object;
receiving a second triggering operation for the effect editing items corresponding to the special effect elements, and displaying effect editing parameters corresponding to the special effect elements; and
receiving a parameter setting operation for the effect editing parameters, and determining, based on parameter values of the set effect editing parameters, a display effect of the special effect elements.

2. The special effect display method of claim 1, wherein the determining, based on the effect editing parameters set by the parameter setting operation, the display effect of the special effect elements, comprises:
converting the parameter values of the effect editing parameters into a node relationship graph based on a node visualization tool, generating an effect control script based on the node relationship graph, and executing the effect control script to cause the special effect elements to present the display effect corresponding to the effect editing parameters.

3. The effects display method of claim 1 or 2, wherein the effect editing parameters comprises an animation setting parameter; the receiving the parameter setting operation for the effect editing parameters comprises:
receiving the parameter setting operation for the animation setting parameter, and displaying multiple animation options; and
receiving a selection operation for the animation options, and using the selected animation option as a parameter value of the animation setting parameter.

4. The special effect display method of any one of claims 1 to 3, further comprising
receiving a special effect combination operation acting on the effect editing interface, and displaying a special effect combination interface; and
receiving a special effect element adding operation acting on the special effect combination interface, and displaying the added special effect elements in combination.

5. The special effect display method of claim 4, wherein the displaying the added special effect elements in combination comprises:
receiving a switch setting operation for multiple added special effect elements, and determining, based on the switch setting operation, a switch manner among the multiple special effect elements; and
switching and displaying of the multiple special effect elements in the switch manner in response to a preview triggering operation.

6. The special effect display method of claim 5, wherein the receiving the switch setting operation for the multiple added special effect elements, and the determining, based on the switch setting operation, the switch manner among the multiple special effect elements, comprises:
receiving a selection operation of a switch mode for the multiple added special effect elements, and using the selected switch mode as the switch mode among the multiple special effect elements.

7. The special effect display method of claim 5, wherein the receiving the switch setting operation for the multiple added special effect elements, and the determining, based on the switch setting operation, the switch manner among the multiple special effect elements, comprises:
receiving a switch time setting operation for the multiple added special effect elements, and using the set switch time as a continuous display time during every two of the special effect elements.

8. The special effect display method of claim 5, wherein the receiving the switch setting operation for the multiple added special effect elements, and the determining, based on the switch setting operation, the switch manner among the multiple special effect elements, comprises:
receiving a switch start setting operation for the multiple added special effect elements, and determining a trigger event for starting the switching and displaying of the multiple special effect elements; and/or,
receiving a switch end setting operation for the multiple added special effect element, and determining a trigger event for ending the switching and displaying of the multiple special effect element.

9. The special effect display method of any one of claims 1 to 8, further comprising
in the absence of setting the effect editing parameters corresponding to the special effect elements, taking a continuous display of the special effect elements as the display effect of the special effect elements.

10. The special effect display method of any one of claims 1 to 9, further comprising:
when the effect editing interface is in a display state, in response to a selection operation acting on special effect elements in a template image, highlighting the effect editing items corresponding to the selected special effect elements in the effect editing interface or displaying effect editing parameters corresponding to the special effect elements.

11. A special effect display apparatus, comprising:
an editing interface display module, configured to receive a first triggering operation and display an effect editing interface, wherein the effect editing interface displays effect editing items corresponding to special effect elements that have been added to a special effect action object;
an editing parameter display module, configured to receive a second triggering operation for the effect editing items corresponding to the special effect elements and display effect editing parameters corresponding to the special effect elements; and
a display effect determination module, configured to receive a parameter setting operation for the effect editing parameters, and determine, based on parameter values of the set effect editing parameters, a display effect of the special effect elements.

12. The special effect display apparatus of claim 11, wherein the display effect determination module comprises an effect control script generation unit, and the effect control script generation unit is configured to:
convert the parameter values of the effect editing parameters into a node relationship graph based on a node visualization tool, generate an effect control script based on the node relationship graph, and execute the effect control script to cause the special effect elements to present the display effect corresponding to the effect editing parameters.

13. The special effect display apparatus of claim 11 or 12, wherein the effect editing parameters comprises an animation setting parameter, and the display effect determination module is further configured to:
receive a parameter setting operation for the animation setting parameter and display multiple animation options; and
receive a selection operation for the animation options, and use the selected animation option as a parameter value of the animation setting parameter.

14. The special effect display apparatus of any one of claims 11 to 13, further comprising a special effect combination display module, wherein the special effect combination display module is configured to:
receive a special effect combination operation acting on the effect editing interface and display a special effect combination interface; and
receive a special effect element adding operation acting on the special effect combination interface, and display the added special effect elements in combination.

15. The special effect display apparatus of claim 14, the special effect combination display module comprises a special effect switch setting unit, wherein the special effect switch setting unit is configured to:
receive a switch setting operation for multiple added special effect elements, and determine, based on the switch setting operation, a switch manner among the multiple special effect elements; and
switch the display of the multiple special effect elements in the switch manner in response to a preview triggering operation.

16. The special effect display apparatus of claim 15, wherein the special effect switch setting unit comprises a switch mode determination subunit, and the switch mode determination subunit is configured to:
receive a selection operation of a switch mode for the multiple added special effect elements, and use the selected switch mode as the switch mode among the multiple special effect elements.

17. The special effect display apparatus of claim 15, wherein the special effect switch setting unit comprises a switch time determination subunit, and the switch time determination subunit is configured to:
receive a switch time setting operation for the multiple added special effect elements, and use the set switch time as a continuous display time during every two of the special effect elements.

18. The special effect display apparatus of claim 15, wherein the special effect switch setting unit comprises a trigger event determination subunit, and the trigger event determination subunit is configured to:
receive a switch start setting operation for the multiple added special effect elements, and determine a trigger event for starting the switching and displaying of the multiple special effect elements; and/or,
receive a switch end setting operation for the multiple added special effect elements, and determine a trigger event for ending the switching and displaying of the multiple special effect elements.

19. An electronic device, comprising:
one or more processors; and
a storage apparatus, configured to store one or more programs;
wherein when the one or more programs are executed by the one or more processors, the one or more processors are caused to implement the special effect display method of any one of claims 1 to 10.

20. A storage medium comprising computer-executable instructions, wherein the computer-executable instructions, when executed by a computer processor, are used for executing the special effect display method of any one of claims 1 to 10.
